# EUROPEAN PATENT APPLICATION

(11) **EP 2 690 735 A1**
(43) Date of publication of application: **29.01.2014**
(21) Application number: 11861503.8
(22) Date of filing: 24.03.2011
(51) Int. Cl.: H02G 11/00, B60K 1/04, B60L 11/18, B65H 75/36, H02J 7/00

(54) **CORD-ACCOMMODATING DEVICE AND VEHICLE**

(71) Applicant: Toyota Jidosha Kabushiki Kaisha, Toyota-shi, Aichi 471-8571 (JP)
(72) Inventor: KINOMURA, Shigeki, Toyota-shi Aichi 471-8571 (JP)
(74) Representative: TBK
(86) International application number: PCT/JP2011/057153
(87) International publication number: WO 2012/127678

(57) **Abstract**

A cord housing device includes an enclosure (51), a cord (50) capable of being stored in the enclosure (51) and drawn out from the enclosure (51), and a plug (42) provided at an end of the drawing out side of the cord (50), and connectable to an external power supply. In a natural state, the cord (50) is formed so as to bend back at a bent (60) provided at intervals in the length direction of the cord (50), and extend in a meandering manner. In the enclosure (51), the cord (50) is stored such that the region of the cord located between bents (60) overlap each other.

## Description

### TECHNICAL FIELD

The present invention relates to a cord housing device and a vehicle.

### BACKGROUND ART

Until now, various types of cord housing devices as well as an electric vehicle or the like mounted with the cord housing device have been proposed.

The electric vehicle disclosed in Japanese Patent Laying-Open No. 2009-136108 includes a battery unit, a charging device, a charging cord housing unit, and a charging cord. The charging cord is of the coiled type, spirally wound.

An electrically assisted vehicle disclosed in Japanese Patent Laying-Open No. 11-8941 includes a drip-proof case, a chargeable battery stored in the drip-proof case, a charger for charging the chargeable type battery with electric power supplied from a household AC power supply, and a cable provided in a storable manner in the drip-proof case for connecting a charger to the household AC power supply at the time of charging.

An electric powered vehicle disclosed in Japanese Patent Laying-Open No. 7-117492 includes a charging cord box. A charging cord is stored in the charging cord box.

### CITATION LIST

### PATENT DOCUMENT

PTD 1: Japanese Patent Laying-Open No. 2009-136108
PTD 2: Japanese Patent Laying-Open No. 11-8941
PTD 3: Japanese Patent Laying-Open No. 7-117492

### SUMMARY OF INVENTION

### TECHNICAL PROBLEM

The charging cord disclosed in Japanese Patent Laying-Open No. 2009-136108 is increased in the winding radius and/or bending radius when in a stored state since the charging cord is of the coiled type. As a result, the charging cord housing unit becomes larger.

At the electrically assisted vehicle disclosed in Japanese Patent Laying-Open No. 11-8941, the cable is cramped into the drip-proof case. As a result, the cable may not be stored neatly in the drip-proof case depending upon the user's handling, leading to the possibility of the cable being tangled.

The electric powered vehicle disclosed in Japanese Patent Laying-Open No. 7-117492 has the possibility of the volume of the charging cord box being increased since the charging cord is of the coiled type.

In view of the foregoing, an object of the present invention is to provide a cord housing device allowing downsizing and storage of the cord neatly in an enclosure, and a vehicle with the cord housing device.

### SOLUTION TO PROBLEM

The cord housing device according to the present invention includes an enclosure, a cord capable of being stored in the enclosure and drawn out from the enclosure, and a plug provided at an end of the drawing out side of the cord, and connectable to an external power supply. The cord is formed so as to bend back at a bent provided at intervals in the length direction of the cord, and extend in a meandering manner. In the enclosure, the cord is stored such that the region of the cord located between bents overlap each other.

Preferably, the cord includes a core wire and an insulative coating covering the core wire. In a straightened state of the cord, a projection is formed at a region of the insulative coating corresponding to a bending outer circumferential side. The projection biases the cord to bend back.

Preferably, the enclosure includes a first support supporting one side face of the cord in a stored state, and a second support supporting the other side face of the cord in the stored state. Preferably, the first support and the second support include a sidewall of the enclosure.

Preferably, the distance between the first support and the second support is less than or equal to two times the width of the cord.

Preferably, at a cross section perpendicular to the length direction of the cord, the cord has a circular shape. Preferably, at the cross section perpendicular to the length direction of the cord, the thickness of the cord is smaller than the width of the cord.

Preferably, the cord housing device further includes a draw in/out device for drawing the cord in/out from the enclosure. The draw in/out device is driven such that the cord is drawn into the enclosure when a first external force in a direction to draw the cord into the enclosure is applied to the cord, and such that the cord is drawn outside of the enclosure when a second external force in a direction to draw out the cord from the enclosure is applied to the cord.

Preferably, the draw in/out device includes a roller for drawing in and out the cord, a motor driving the roller, and a detector. The motor includes a rotor connected to the roller, a stator arranged around the rotor, and a coil provided at the stator. The detector detects a first back electromotive force and a second back electromotive force generated at the coil by rotation of the rotor through the first external source and the second external force, respectively. The motor is driven such that the cord is drawn into the enclosure when the first back electromotive force is generated, and such that the cord is drawn outside of the enclosure when the second back electromotive force is generated.

A vehicle according to the present invention includes a body having a boarding opening formed, a battery stored in the body, the foregoing cord housing device capable of supplying electric power from an external power supply to the battery, and a take out unit provided at the body, allowing the plug and cord to be taken out. The take out unit is arranged at a rear side relative to the boarding opening.

A vehicle according to the present invention includes a body having a boarding opening formed, a battery stored in the body, the foregoing cord housing device capable of supplying electric power from an external power supply to the battery, a take out unit allowing the plug and cord to be taken out, a first connector to which is connected a first external plug connected to an external power supply, and a second connector to which is connected an externally provided second external plug, and to which energy differing from electric power is supplied from the second external plug.

The body includes a first side face and a second face aligned in the width direction of the vehicle. The first and second connectors are provided at the first side face. The take out unit is provided at a region of a circumferential face of the vehicle other than the first side face. Preferably, the take out unit is arranged at a rear side relative to the boarding opening. Preferably, the take out unit is provided at the second side face.

A vehicle according to the present invention includes a body having a boarding opening formed, a battery stored in the body, the foregoing cord housing device capable of supplying electric power from an external power supply to the battery, a take out unit allowing the plug and cord to be taken out, a first connector to which is connected a first external plug connected to an external power supply, and a second connector to which an externally provided second external plug is connected, and to which energy differing from electric power is supplied from the second external plug. The body includes a first side face and a second face aligned in the width direction of the vehicle. The first connector is provided at the first side face. The second connector is provided at the second side face. The take out unit is provided at a circumferential face of the vehicle other than the second side face.

Preferably, the first connector and the take out unit are provided at a rear side relative to the boarding opening. Preferably, an operation unit for operating the vehicle is provided in the body. The operation unit is provided closer to the first side face than the second side face.

A vehicle according to the present invention includes a body having a boarding opening formed, a battery stored in the body, the foregoing cord housing device capable of supplying electric power from an external power supply to the battery, a take out unit allowing the plug and cord to be taken out, and a first connector to which is connected a first external plug connected to an external power supply. The body includes a top face, a bottom face, and a plurality of unitary circumferential faces provided between the top face and the bottom face. The take out unit and the first connector are provided at the same unitary circumferential face.

Preferably, the body includes a lid provided at the unitary circumferential face where the take out unit and the first connector are provided. The take out unit and the first connector can be opened/closed by the lid.

### ADVANTAGEOUS EFFECTS OF INVENTION

By the cord housing device of the present invention, the device can be downsized and the cord can be stored neatly in an enclosure.

### BRIEF DESCRIPTION OF DRAWINGS

Fig. 1 is a perspective view representing a vehicle 10 including a cord housing device 30 of the present embodiment.
Fig. 2 is a right side view of vehicle 10 shown in Fig. 1.
Fig. 3 is a left side view of vehicle 10 shown in Fig. 1.
Fig. 4 is a block diagram of vehicle 10.
Fig. 5 is a side view schematically representing a driving device storage chamber 33, a passenger compartment 34, and a luggage compartment 35 provided in vehicle 10.
Fig. 6 is a perspective view schematically representing a cord housing device 30 and a cord take out unit 31.
Fig. 7 is a perspective view schematically representing cord take out unit 31.
Fig. 8 is a sectional view of cord housing device 30, viewed from above.
Fig. 9 is a sectional view of a cord draw in device 52.
Fig. 10 is a sectional view schematically representing a state where tension is applied at both ends of a charging cable 50.
Fig. 11 is a perspective view schematically representing a configuration of a projection 65 and the neighborhood thereof.
Fig. 12 is a perspective view representing a portion of charging cable 50 in a natural state.
Fig. 13 is a perspective view schematically representing a cable 67.
Fig. 14 is a schematic view of a fabrication process of charging cable 50.
Fig. 15 is a cross section perspective view of charging cable 50.
Fig. 16 is a perspective view schematically representing cord housing device 30 mounted with charging cable 50 of Fig. 15.
Fig. 17 is a perspective view schematically representing a storage chamber 40 shown in Fig. 16.
Fig. 18 is a perspective view of an external charging facility 90 shown in Figs. 1 and the like.
Fig. 19 is a side view of vehicle 10 according to a second embodiment.
Fig. 20 is a perspective view of the rear side of vehicle 10 shown in Fig. 19.
Fig. 21 is a perspective representing a first modification of a mounting position of cord take out unit 31.
Fig. 22 is a side view representing a second modification of a mounting position of cord take out unit 31.
Fig. 23 is a perspective view of vehicle 10 shown in Fig. 22.
Fig. 24 is a side view representing a third modification of cord take out unit 31 and cord housing device 30.
Fig. 25 is a perspective view of vehicle 10 according to a third embodiment.
Fig. 26 is a side view of vehicle 10.
Fig. 27 is a perspective view of a charging unit 150 viewed from above.
Fig. 28 is a side view of vehicle 10 shown in Fig. 28.
Fig. 29 is a side view representing a first modification of a mounting position of cord take out unit 31 and cord housing device 30 at vehicle 10 according to the third embodiment.
Fig. 30 is a perspective view of vehicle 10 according to a second modification.
Fig. 31 is a side view of vehicle 10 show in Fig. 30.
Fig. 32 is a perspective view representing a second modification of vehicle 10 according to the third embodiment.
Fig. 33 is a perspective view of vehicle 10 according to a third modification.
Fig. 34 is a side view of vehicle 10 shown in Fig. 33.

### DESCRIPTION OF EMBODIMENTS

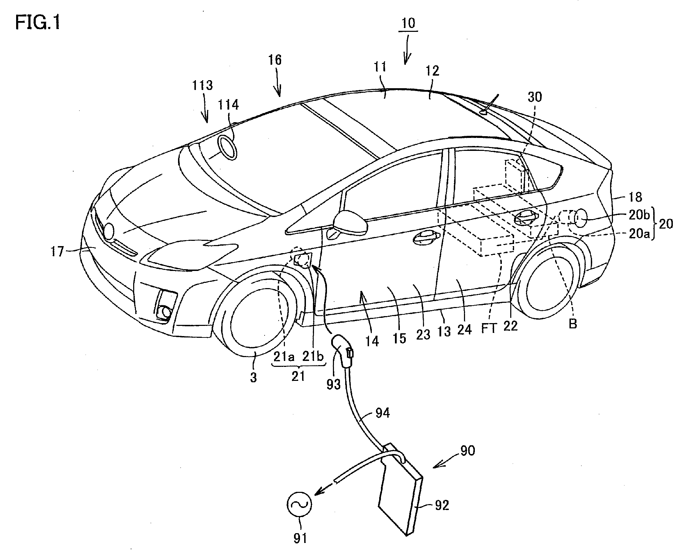

A cable housing device and a vehicle according to embodiments of the present invention will be described with reference to Figs. 1-34. Although the embodiments will be described based on an application to the so-called hybrid vehicle, the present invention is obviously also applicable to an electric vehicle.

### (First Embodiment)

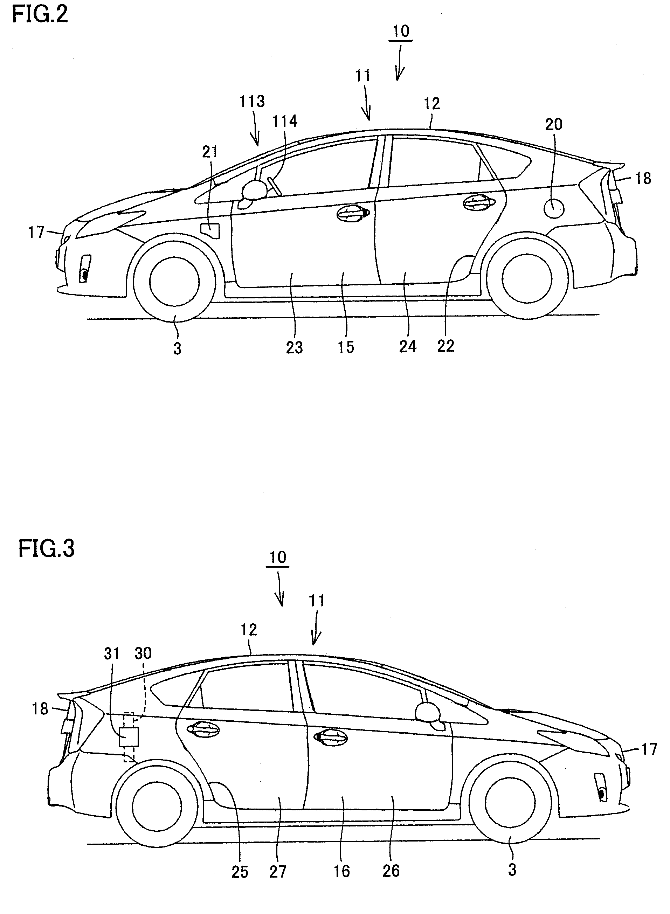

Fig. 1 is a perspective view representing a vehicle 10 including a cord housing device 30 according to the present embodiment. Figs. 2 and 3 are a right side view and a left side view, respectively, of vehicle 10 shown in Fig. 1.

Referring to Fig. 1, vehicle 10 includes a body 11 defining the contour of vehicle 10, and a fuel tank FT and a battery B stored in body 11.

The surface of body 11 includes a top face 12, a bottom face 13, and a circumferential face 14. Circumferential face 14 includes side faces 15 and 16, a front face 17, and a rear face 18.

Referring to Figs. 1 and 2, a boarding opening 22 is provided at side face 15. Body 11 includes doors 23 and 24 for opening/closing boarding opening 22. In the example shown in Figs. 1 and 2, a driver seat 113 is located closer to side face 16 than side face 15. An operation unit such as a steering wheel 114 for operating vehicle 10 is provided at driver seat 113.

At side face 15, a fuel feed unit 20 and a charging unit 21 are provided. Fuel feed unit 20 is arranged at a rear side relative to boarding opening 22. Charging unit 21 is arranged at a front side relative to boarding opening 22.

Fuel feed unit 20 includes a nozzle insertion unit 20a where the nozzle section of an externally-provided fuel service nozzle is to be inserted, and a lid 20b provided at body 11. By opening lid 20b, the mouth of nozzle insertion unit 20a is exposed, allowing insertion of the nozzle section of the fuel service nozzle into nozzle insertion unit 20a.

A fuel tank FT is connected to the nozzle insertion unit. The fuel supplied from nozzle insertion unit 20a is delivered into fuel tank FT. For a vehicle including an internal combustion engine, the fuel to be supplied includes gasoline, LP gas (liquefied petroleum gas), or the like. For a vehicle including a fuel cell, liquid hydrogen, ethanol, or the like can be cited.

Charging unit 21 includes a charging connector 21 a to which an externally provided charging plug 93 is to be attached, and a lid 21b provided at body 11. By opening lid 21 b, charging connector 21 a is exposed, allowing a charging plug 93 to be attached to charging connector 21 a.

To charging connector 21 a of charging unit 21 is supplied electric power of high voltage of approximately 288V, for example, from charging plug 93. Charging connector 21a is connected to battery B via a converter or the like. Battery B is charged by the electric power supplied to charging unit 21.

Referring to Fig. 3, a boarding opening 25 is provided at side face 16. Doors 26 and 27 for opening/closing boarding opening 25 are provided at body 11.

In the present embodiment, cord take out unit 31 is arranged at a region of side face 16 at a rear side relative to boarding opening 25. Cord take out unit 31 includes a charging plug and a lid provided at body 11. By opening the lid, the charging plug can be drawn outside. The details of the configuration of cord take out unit 31 and cord housing device 30 will be described afterwards.

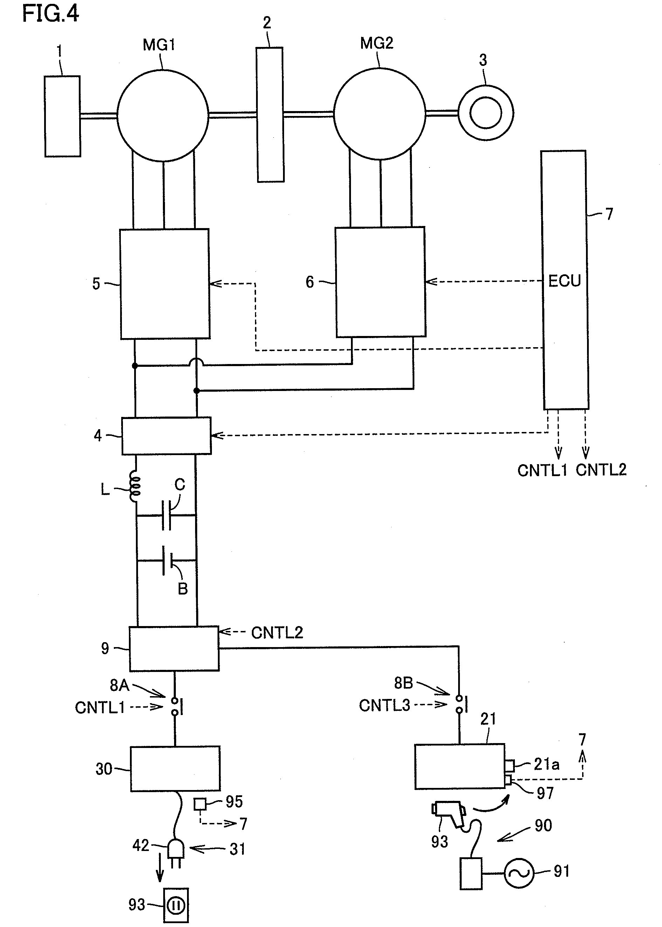

Fig. 4 is a block diagram of vehicle 10. Vehicle 10 includes an engine 1, motor generators MG1 and MG2, a power split mechanism 2, a battery B, a capacitor C, a reactor L, a converter 4, inverters 5 and 6, a vehicle ECU (Electronic Control Unit) 7, switching elements 8A and 8B such as a relay, a converter 9, a cord take out unit 31, and a charging unit 21.

Power split mechanism 2 is coupled to engine 1 and motor generators MG1 and MG2 to split power therebetween. For example, a planetary gear mechanism including three rotational shafts of a sun gear, a planetary carrier, and a ring gear is employed for power split mechanism 2. The three rotational shafts are connected to each rotational shaft of engine 1 and motor generators MG1 and MG2. For example, by passing the crankshaft of engine 1 through the center of a hollow rotor of motor generator MG1, engine 1 and motor generators MG and MG2 are mechanically coupled with power split mechanism 2.

The rotational shaft of motor generator MG2 is coupled to a front wheel 3 that is a driving wheel by a reduction gear or differential gear not shown. A speed reducer for the rotational shaft of motor generator MG2 may be further incorporated in power split mechanism 2.

Motor generator MG1 is incorporated in vehicle 10 operating as a power generator driven by engine 1 and also as an electric motor that may be used for the startup of engine 1. Motor generator MG2 is incorporated in vehicle 10 as an electric motor driving front wheel 3 that is the driving wheel of vehicle 10.

Motor generators MG1 and MG2 are, for example, a three-phase AC synchronous electric motor. Motor generators MG1 and MG2 include a three-phase coil of a U-phase coil, a V-phase coil, and a W-phase coil as a stator coil.

Motor generator MG1 uses the engine output to generate three-phase AC voltage. The generated 3-phase AC voltage is output to inverter 5. Motor generator MG1 generates the driving force by the three-phase AC voltage received from inverter 5 to carry out the startup of engine 1.

Motor generator MG2 generates the drive torque of the vehicle by the 3-phase AC voltage received from inverter 6. Motor generator MG2 generates and outputs to inverter 6 three-phase AC voltage during regenerative braking of the vehicle.

Switching element 8A is provided between converter 9 and cord housing device 30. Switching element 8B is arranged between charging unit 21 and converter 9. Switching element 8A establishes or cuts off the connection between cord housing device 30 and converter 9. Switching element 8B establishes or cuts off the connection between charging unit 21 and converter 9. Switching element 8A responds to a control signal CNTL1 of vehicle ECU 7 to be switched between ON/OFF. Converter 9 is driven under control of vehicle ECU 7 by a control signal CNTL2. Switching element 8B responds to a control signal CNTL3 of vehicle ECU 7 to be switched between ON/OFF.

When battery B is to be charged using the charging plug of cord take out unit 31, vehicle ECU 7 sets switching element 8A ON to establish connection between battery B and converter 9. Then, vehicle ECU 7 drives converter 9 such that the AC power supplied from a power supply is converter into DC power. At this stage, vehicle ECU 7 sets switching element 8B OFF.

When charging battery B with charging plug 93 connected to charging connector 21a of charging unit 21, vehicle ECU 7 sets switching element 8B ON to establish connection between charging unit 21 and converter 9. At this stage, vehicle ECU 7 sets switching element 8A OFF. Then, vehicle ECU 7 drives converter 9 such that the AC electric power supplied from an external power supply 91 is converted into DC electric power.

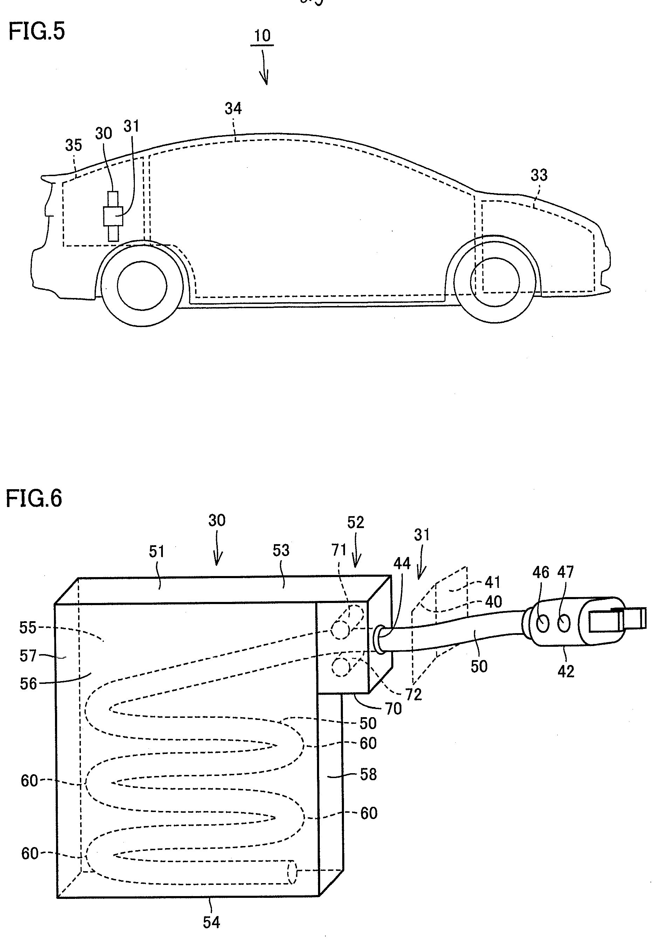

Fig. 5 is a side view schematically representing a driving device storage chamber 33, a passenger compartment 34 and a luggage compartment 35 formed in vehicle 10. As shown in Fig. 5, there are provided in vehicle 10 a driving device storage chamber 33 in which engine 1, motor generators MG1, MG2, and the like are stored, a passenger compartment 34 where a passenger is to be seated, and a luggage compartment 35 for storing luggage and the like. Driving device storage chamber 33 is arranged at the front side of passenger compartment 34. Luggage compartment 35 is arranged at the rear side of passenger compartment 34. Cord housing device 30 is provided in luggage compartment 35.

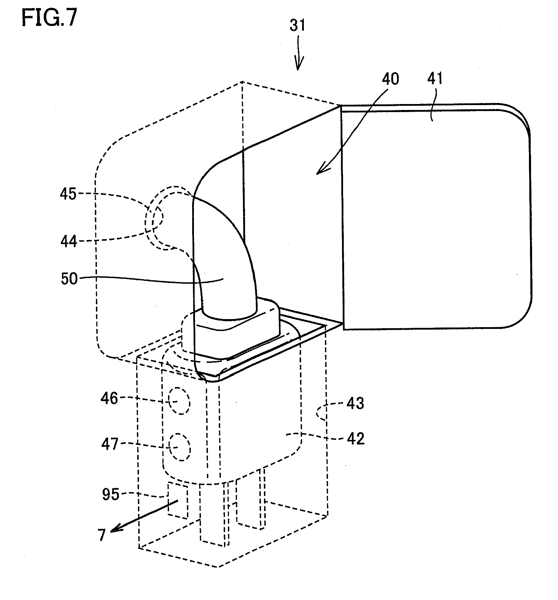

Fig. 6 is a perspective view schematically representing cord housing device 30 and cord take out unit 31. Fig. 7 is a perspective view schematically representing cord take out unit 31.

As shown in Figs. 6 and 7, cord take out unit 31 includes a storage chamber 40 having an opening formed at side face 16, a lid 41 provided at side face 16 for opening/closing the mouth of storage chamber 40, a plug storage hole 43 formed at storage chamber 40, a charging plug 42, and a charging cable 50 connected to charging plug 42.

Charging plug 42 can be stored inside plug storage hole 43. Charging cable 50 is connected to charging plug 42. Switches 46 and 47 are provided at the casing of charging plug 42.

A hole 44 for the passage of charging cable 50 is formed at the inner sidewall of storage chamber 40. A packing 45 is provided at the edge of the mouth of hole 44.

Packing 45 serves to prevent intrusion of a foreign object, water, and the like adhering to charging cable 50 into body 11.

Referring to Fig. 6, cord housing device 30 includes charging cable 50, charging plug 42 provided at the end of the drawing out side of charging cable 50, enclosure 51 for storing charging cable 50, and a cord draw in device 52.

In enclosure 51, charging cable 50 is stored in a meandering bent state.

Enclosure 51 includes a top panel 53, a bottom panel 54, side panels 55 and 56, a rear panel 57, and a front panel 58.

Top panel 53 and bottom panel 54 are aligned in the height direction of the vehicle. Front panel 58 and rear panel 57 are aligned in the width direction of vehicle 10. Side panels 55 and 56 are aligned in the longitudinal direction of vehicle 10. Cord draw in device 52 is provided at front panel 58.

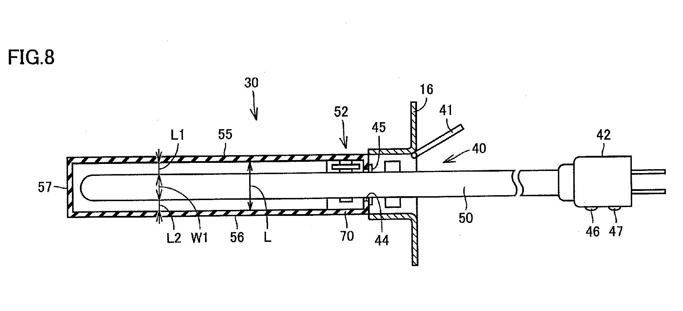

Fig. 8 is a sectional view of cord housing device 30 viewed from above. In Figs. 8 and 7, charging cable 50 is bent so as to be folded at a bent 60. Charging cable 50 is stored such that the region located between bents 60 overlap each other in the height direction.

Specifically, referring to Fig. 8, charging cable 50 is stored such that, when viewed from above cord housing device 30, the region of charging cable 50 located between bents 60 overlap each other in the height direction.

A distance L between side panels 55 and 56 is slightly larger than the width W of charging cable 50, directed to rendering cord housing device 30 thin. By this thinning of cord housing device 30, the mounting efficiency of devices in vehicle 10 can be improved. For example, distance L is set at a range greater than or equal to 1.2 times and smaller than 2.0 times the width W.

Thus, the distance L1 between the side face of charging cable 50 and side panel 55 and the distance L2 between the side face of charging cable 50 and side panel 56 can be prevented from becoming larger than width W of charging cable 50. This can prevent destruction of the stacked state of charging cable 50 in cord housing device 30.

Side panels 55 and 56 support the side face of charging cable 50 bent in a meandering manner to maintain the posture of charging cable 50. Although the example in the present embodiment employs side panels 55 and 56 as the members for supporting the side face of charging cable 50 in cord housing device 30, a member other than side panels 55 and 56 may be provided in cord housing device 30 as the support member. For example, an overhanging member supporting the side face of charging cable 50 may be provided at rear panel 57 and/or front panel 58.

As shown in Figs. 6 and 8, cord draw in device 52 includes an enclosure 70 provided at front panel 58, and devices stored in enclosure 70. As shown in Fig. 8, one circumferential face of enclosure 70 partially defines a portion of storage chamber 40. A hole 44 through which charging cable 50 is inserted is formed at enclosure 70.

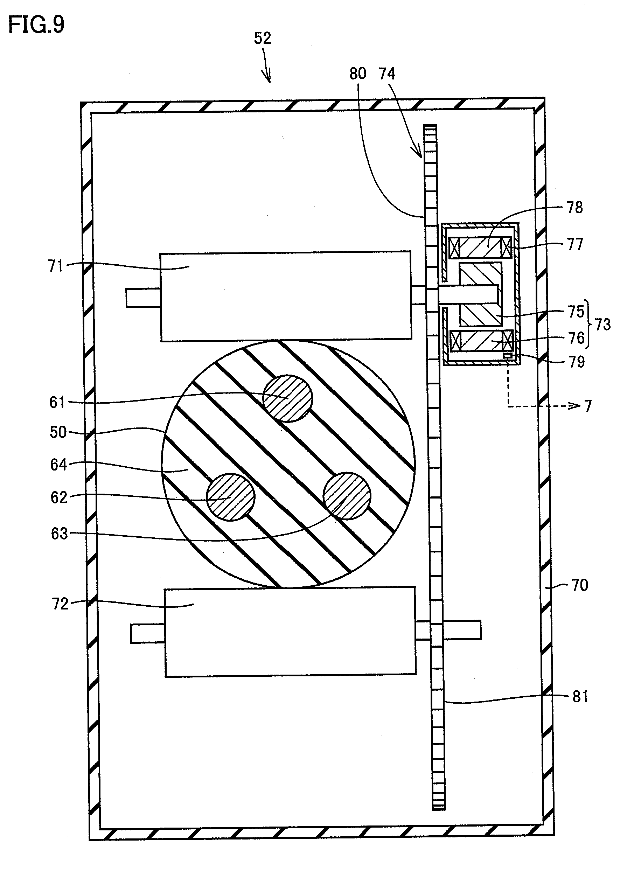

Fig. 9 is a sectional view of cord draw in device 52. Referring to Fig. 9, cord draw in device 52 includes enclosure 70, rollers 71 and 72 provided in enclosure 70, a rotating electric machine 73 for rotatably driving roller 71, and a power transmission mechanism 74 transmitting the rotational drive of roller 71 to roller 72.

Rollers 71 and 72 are arranged spaced apart. Charging cable 50 is clamped between rollers 71 and 72.

Rotating electric machine 73 includes a case, a rotor 75 stored in the case, and stator 76. Stator 76 includes an annular stator core 78, a stator coil 77 attached to stator core 78, and a voltage sensor 79 sensing the voltage of the electric power running through stator coil 77. Rotor 75 is fixed to the rotational shaft of roller 71. Rotor 75 includes a rotor core, and a magnet provided in the rotor core. Power transmission mechanism 74 includes a gear 80 fixed to the rotational shaft of roller 71, and a gear 81 fixed to the rotational shaft of roller 72. Gears 80 and 81 mesh with each other.

When current is supplied to stator coil 77, rotor 75 rotates, which causes roller 71 and gear 80 to rotate. In response to rotation of gear 80, gear 81 and roller 72 rotate in the direction opposite to the rotating direction of gear 80 and roller 71.

The aforementioned rotation of rollers 71 and 72 causes charging cable 50 to be drawn out from cord housing device 30 or drawn into cord housing device 30.

As shown in Fig. 9, charging cable 50 is formed such that the cross section perpendicular to the length direction of charging cable 50 takes a circular shape.

Therefore, charging cable 50 in cord housing device 30, even if twisted, is rotated to be corrected in posture in cord housing device 30.

Charging cable 50 includes core wires 61, 62, 63, and an insulative coating 64 covering core wires 61, 62, and 63. Insulative coating 64 is formed of insulative resin material that is elastically deformable. Core wires 61 and 62 are electric power lines. Core wire 63 is, for example, a ground line.

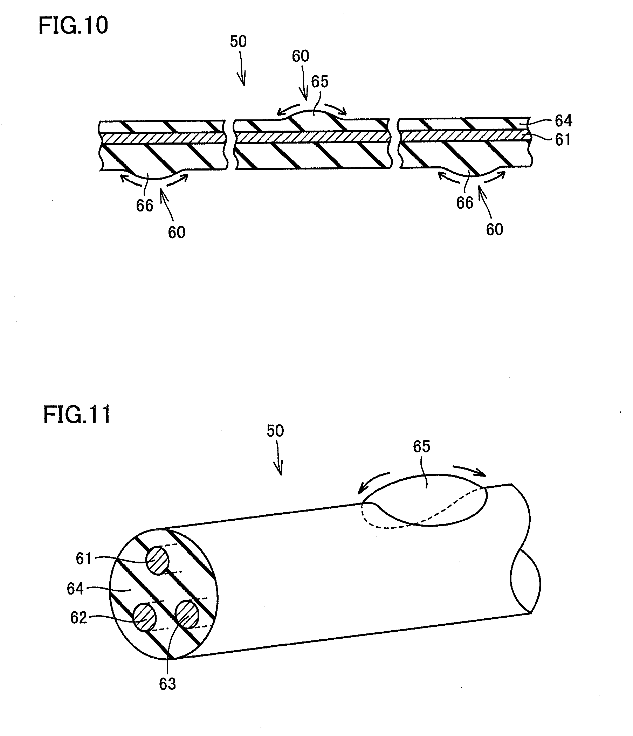

Fig. 10 is a sectional view schematically representing a state where tension is applied at both ends of charging cable 50.

When charging cable 50 that bends in a meandering manner is straightened linearly as shown in Fig. 10, projections 65 and 66 are formed at the surface of insulative coating 64 at the region located at the bending outer circumferential side of bent 60.

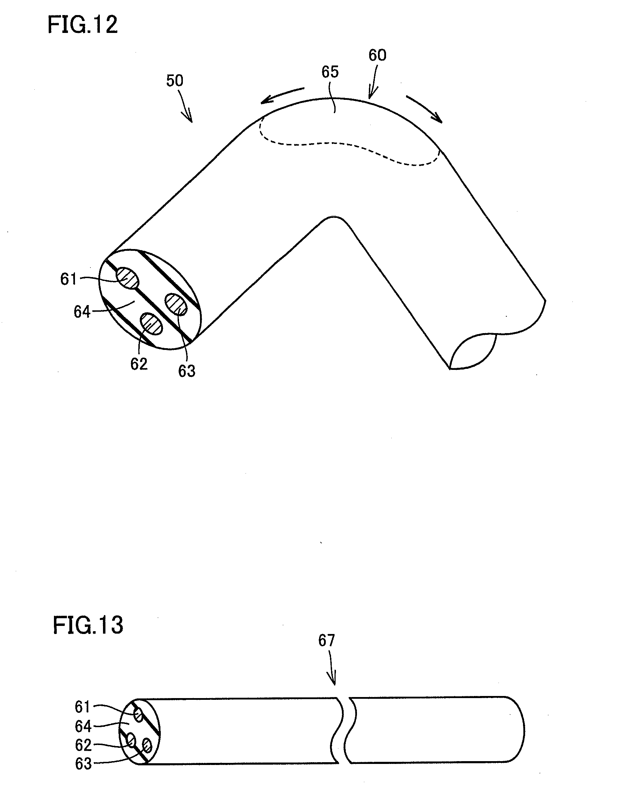

Fig. 11 is a perspective view schematically representing a configuration of projection 65 and the neighborhood thereof. As shown in Figs. 11 and 10, projection 65 has internal stress in the direction of bending charging cable 50. Therefore, when the tension applied to charging cable 50 is removed, charging cable 50 is bent back at the area of projection 65, as shown in Fig. 12. Thus, a bent 60 is developed at charging cable 50.

The bending of charging cable 50 causes projection 65 to be stretched, so that projection 65 is reduced in height. As a result, the bulge of projection 65 is less discernible in the state bent at bent 60.

When viewing projections 65 and 66 from a site distant therefrom in the extending direction of charging cable 50 in Fig. 10, projections 65 and 66 are located symmetric to the center line of charging cable 50. When the tension applied to charging cable 50 is removed, charging cable 50 curves by the internal force of projection 66.

Projections 65 and 66 are provided alternately in the length direction of charging cable 50. Therefore, in a natural state, charging cable 50 bends at each of projections 65 and 66 to attain a meandering state. As used herein, a natural state implies a state not receiving external force from an external source.

As a result, charging cable 50 is bent in a meandering manner inside cord housing device 30, and the region between bents 60 overlap in the height direction, as shown in Fig. 6.

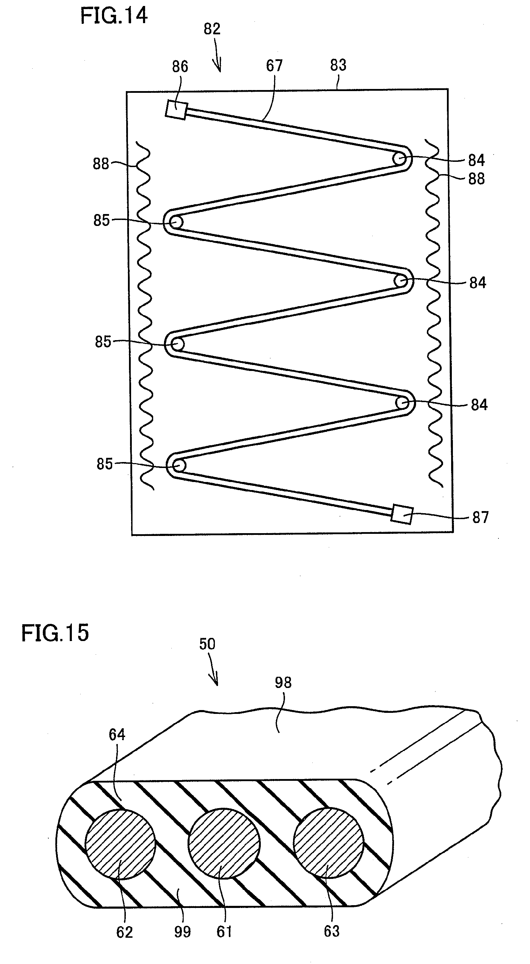

A method of fabricating charging cable 50 will be described hereinafter with reference to Figs. 13 and 14. First, a cable 67 including core wires 61, 62 and 63, and insulative coating 64 covering core wires 61-63 is produced.

This cable 67 does not have a projection 65 formed, and attains substantially a linear state when in a state not receiving external force.

Then, cable 67 is placed in a heater furnace 82 to be heated, as shown in Fig. 14. Heater furnace 82 includes an enclosure 83, a plurality of support stems 84 and 85 provided in enclosure 83, fixtures 86 and 87 fixing the ends of cable 67, and a heater 88 for heating cable 67.

Support stems 84 and 85 are provided alternate to each other in the height direction. Support stems 84 and 85 are arranged spaced apart in the horizontal direction.

Cable 67 is caught at support stems 84 and 85, and has one end fastened to fixture 86 and the other end fastened to fixture 87, as shown in Fig. 14.

By such an arrangement of cable 67, cable 67 is bent at support stems 84 and 85 to be formed in a meandering manner.

By the heating of cable 67 in such a state through heater 88, the region of insulative coating 64 bent by support stems 84 and 85 is stretched.

Following the heating of cable 67 for a predetermined time, cable 67 is cooled to obtain charging cable 50 permanently set to take a meandering state. Projections 65 and 66 are formed at the outer circumference of the region of insulative coating 64 supported by support stems 84 and 85, corresponding to the formation of bent 60 at charging cable 50.

Charging cable 50 is stored in cord housing device 30 in a bending manner so as to be folded back at bent 60, as shown in Fig. 6. Although the entirety of cable 67 is heated by means of heater 88 in the example shown in Fig. 14, a heater may be provided in support stems 84 and 85 to allow cable 67 to be heated locally at support stems 84 and 85.

When battery B is to be charged through charging plug 42, the user opens lid 41 shown in Fig. 7 to take out charging plug 42 from plug storage hole 43.

Then, switch 46 directed to drawing out the charging cable is depressed. When switch 46 attains an ON state, vehicle ECU 7 drives rotating electric machine 73 such that charging cable 50 is drawn out from cord housing device 30.

Thus, charging cable 50 is sequentially drawn outside of storage chamber 40 to allow charging plug 42 to be connected to an external power supply.

When charging cable 50 drawn out is to be stored in cord housing device 30, the user depresses switch 47. Vehicle ECU 7 drives rotating electric machine 73 such that charging cable 50 is drawn into cord housing device 30 in response to an ON state of switch 47.

Since charging cable 50 is permanently set to bend at bent 60, as set forth above, charging cable 50 drawn outside will curve at bent 60 in cord housing device 30 to be stored therein.

Thus, cord draw in device 52 can draw out charging cable 50 from cord housing device 30, or draw in charging cable 50 that has been drawn out into cord housing device 30.

Cord storage device 30 according to the present embodiment has the capability to assist the operation of drawing out charging cable 50 from cord take out unit 31, and the capability to assist the operation of drawing charging cable 50 into cord take out unit 31 for the user. The configuration to achieve such operations will be described with reference to Figs. 6 and 9.

Referring to Fig. 9, voltage sensor 79 senses the voltage of the current flowing through stator coil 77. Vehicle ECU 7 senses the voltage value of the back electromotive force generated at stator coil 77 based on the voltage information sent from voltage sensor 79.

For example, when charging cable 50 is drawn out by a user or the like, rollers 71 and 72 clamping charging cable 50 rotate. The rotation of roller 71 causes rotor 75 to rotate. Rotor 75 fixed to the shaft of rotor 75 rotates in one direction. Rotation of rotor 75 causes the magnet provided at rotor 75 to rotate, causing generation of back electromotive force at stator coil 77.

When charging cable 50 is pushed into cord housing device 30 by the user or the like, rollers 71 and 72 clamping charging cable 50 rotate. The rotation of roller 71 causes rotor 75 to rotate in a direction opposite to the aforementioned direction. The rotation of rotor 75 causes generation of back electromotive force at stator coil 77.

For example, assuming that the voltage of the back electromotive force generated at stator coil 77 when charging cable 50 is drawn out is positive, the back electromotive force generated at stator coil 77 when charging cable 50 is drawn in is negative.

Vehicle ECU 7 determines whether charging cable 50 is drawn out or drawn into cord housing device 30 based on whether the back electromotive force generated at stator coil 77 is positive or negative.

Vehicle ECU 7 calculates the draw out rate or draw in rate of charging cable 50 from the absolute value of the back electromotive force generated at stator coil 77.

When vehicle ECU 7 determines draw out of charging cable 50, vehicle ECU 7 drives rotating electric machine 73 such that charging cable 50 is drawn out from cord housing device 30 at a rate greater than or equal to the calculated draw out rate. Following the draw out of charging cable 50 by a predetermined length through cord draw in device 52, vehicle ECU 7 stops the drive of rotating electric machine 73.

When vehicle ECU 7 determines draw in of charging cable 50, vehicle ECU 7 drives rotating electric machine 73 such that charging cable 50 is drawn into cord housing device 30 at a rate greater than or equal to the calculated draw in rate.

Following the drawing in of charging cable 50 by a predetermined length through cord draw in device 52, vehicle ECU 7 stops the drive of rotating electric machine 73.

Thus, cord housing device 30 incorporates the operation of drawing charging cable 50 out when the user pulls out charging cable 50 without depressing switch 46, and the operation of drawing charging cable 50 into cord housing device 30 when the user pushes charging cable 50 into cord housing device 30 without depressing switch 47.

Vehicle 10 of the present embodiment includes an operation to prevent simultaneous charging by charging plug 42 and by charging plug 93. A configuration to achieve such an operation will be described with reference to Figs. 4 and 7.

Referring to Fig. 7, a contact sensor 95 is provided in plug storage hole 43. Contact sensor 95 is brought into contact with charging plug 42 stored in plug storage hole 43 to be turned ON when in contact with charging plug 42 and turned OFF when detached from charging plug 42. Contact sensor 95 sends a signal to vehicle ECU 7.

Referring to Fig. 4, charging unit 21 includes a charging connector 2 1 a to which charging plug 93 is connected, and a contact sensor 97.

Contact sensor 97 is turned ON when in contact with charging plug 93 and turned OFF when detached from charging plug 93 during connection of charging plug 93 with charging connector 21a. Contact sensor 97 sends a signal to vehicle ECU 7.

When contact sensor 95 attains an OFF state, vehicle ECU 7 turns OFF switching element 8B. Accordingly, charging connector 21a is disconnected from converter 9 when charging plug 42 is pulled out.

Furthermore, when contact sensor 97 attains an ON state, switching element 8A is turned OFF. Accordingly, when charging plug 93 is connected with charging connector 21 a, cord take out unit 31 is disconnected from converter 9. Thus, supply of electric power from both charging plug 93 of external charging facility 90 and from charging plug 42 of cord take out unit 31 can be suppressed.

Although the above example has been described based on charging cable 50 having a circular cross section, another example of a flat cable for charging cable 50 will be described hereinafter with reference to Figs. 15-17. In the configuration of Figs. 15-17, elements identical to or corresponding to those in Figs. 1-14 have the same reference characters allotted, and description thereof may not be repeated.

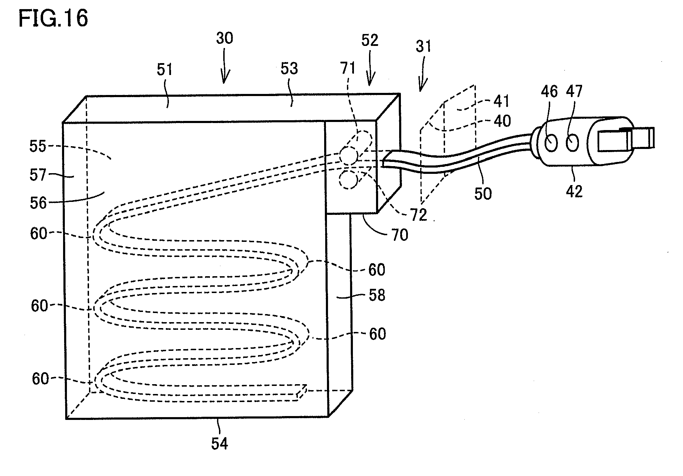

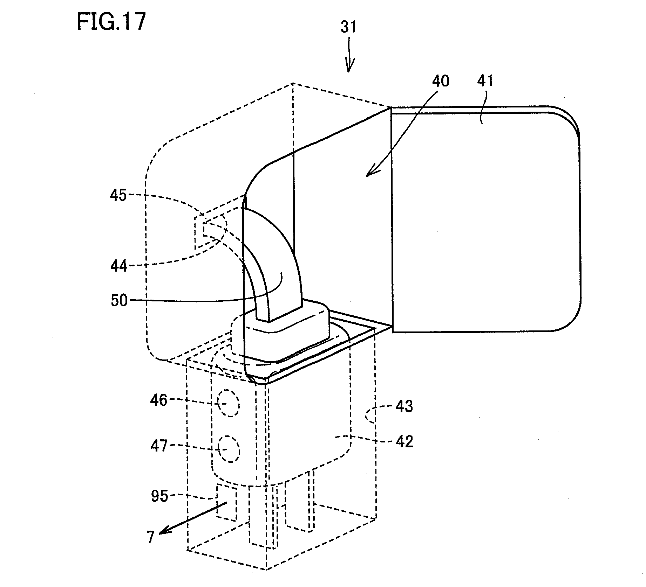

Fig. 15 is a cross section perspective view of charging cable 50. Fig. 16 is a perspective view schematically representing cord housing device 30 incorporating charging cable 50 shown in Fig. 15. Fig. 17 is a perspective view schematically representing storage chamber 40 shown in Fig. 16.

Charging cable 50 shown in Fig. 15 includes core wires 61, 62, 63, and an insulative coating 64 covering core wires 61-63. Core wires 62, 61 and 63 are provided to be aligned in one row.

Therefore, the thickness of charging cable 50 is smaller than the width of charging cable 50 in the aligning direction of core wires 62, 61 and 63. Charging cable 50 is formed in a planar shape, including a main surface 98 and a main surface 99 aligned in the thickness direction.

As shown in Fig. 16, charging cable 50 stored in cord housing device 30 is bent in a meandering manner. Roller 71 forms contact with main surface 98 shown in Fig. 15. Roller 72 forms contact with main surface 99.

By employing such a planar charging cable 50, the twisting of charging cable 50 can be suppressed.

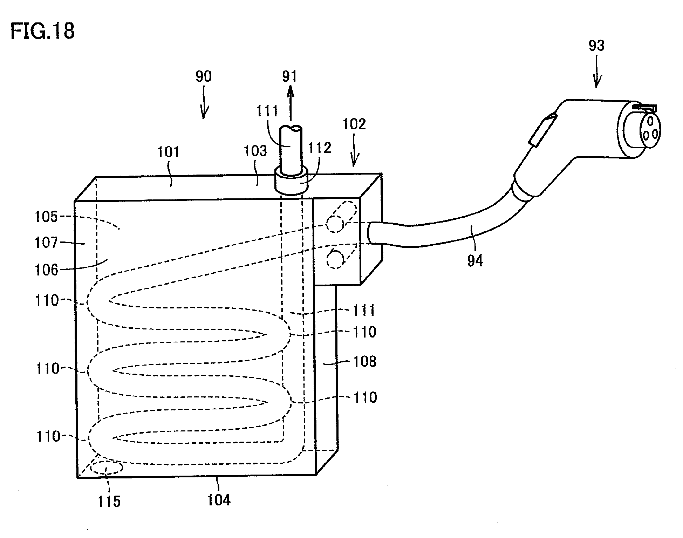

Fig. 18 is a perspective view of external charging facility 90 shown in Figs. 1 and the like. External charging facility 90 is formed likewise with cord housing device 30, as shown in Fig. 18.

External charging facility 90 includes a charging plug 93, a cord 94 connected to charging plug 93, an enclosure 101 storing cord 94, and a cord draw in device 102 provided at enclosure 101.

Charging plug 93 is connectable with charging connector 21 a provided at charging unit 21 of vehicle 10. Cord 94 includes a plurality of bents 110 provided spaced apart in the length direction of cord 94. Cord 94 is stored in cord housing device 30 bent in a meandering manner.

The region of charging plug 93 located between bents 110 is arranged to overlap in the perpendicular direction. Accordingly, enclosure 101 is downsized.

Enclosure 101 includes a top panel 103, a bottom panel 104, and also a side panel 105, a side panel 106, a rear panel 107 and a front panel 108 formed between top panel 103 and bottom panel 104.

A hole 115 is formed at bottom panel 104. A foreign object or water adhering to cord 94, if accumulated at bottom panel 104, can be discharged outside through hole 115. A hole is also formed at top panel 103. A packing 112 is provided at this hole. Cord 94 includes a lead out line 111 that is provided at the termination side of cord 94 and drawn up from bottom panel 104 towards top panel 103. Lead out line 111 passes through packing 112 to be drawn outside of enclosure 101. An external power supply 91 is connected to lead out line 111 via a converter or the like.

Thus, the present invention can be applied to, not only cord housing device 30 mounted on the vehicle, but also external charging facility 90.

Although the first embodiment has been described based on an example where driver seat 113 is located at the side of side face 16, driver seat 113 may be located at the side of side face 15. In this case, the operation unit such as steering wheel 114 is arranged at the side of side face 15.

In vehicle 10 according to the first embodiment shown in Figs. 1-3, fuel feed unit 20 and charging unit 21 are provided at the same side face 15, whereas cord take out unit 31 is provided at a region of circumferential face 14 other than side face 15.

Since charging unit 21 and fuel feed unit 20 are not located around cord take out unit 31, the possibility of the worker carrying out the operation of charging battery B using cord take out unit 31 confusing cord take out unit 31 with charging unit 21 and fuel feed unit 20 can be suppressed.

In the case where cord take out unit 31 is arranged at a rear side relative to boarding opening 25, as shown in Fig. 3, the advantages set forth below can be provided from the aspect of operation.

The charging operation by means of cord take out unit 31 is often performed by parking vehicle 10 at the parking space of a home, for example, and drawing out charging cable 50 and charging plug 42 from cord take out unit 31 to connect charging plug 42 with a household power supply.

When a vehicle is to be parked, vehicle 10 is generally parked such that rear face 18 of vehicle 10 is located closest to the house, or such that vehicle 10 is parked alongside the house. In either parking manner, rear face 18 of vehicle 10 is located in proximity to the house. The general household power supply to which charging plug 42 is connected is typically provided at the house.

Therefore, by virtue of vehicle 10 having cord take out unit 31 arranged at a rear side relative to boarding opening 25, as shown in Fig. 3, the distance between the general household power supply and cord take out unit 31 can be reduced, facilitating the connection of charging plug 42 to the household power supply.

### (Second Embodiment)

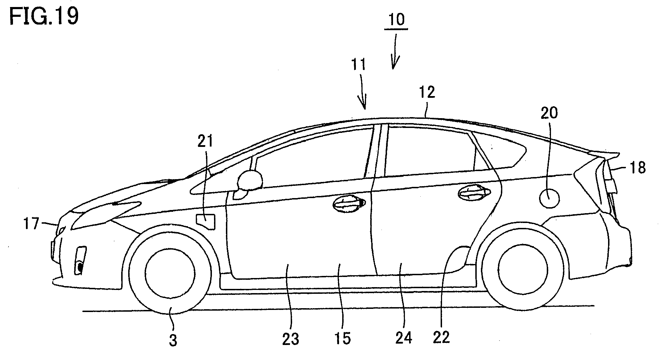

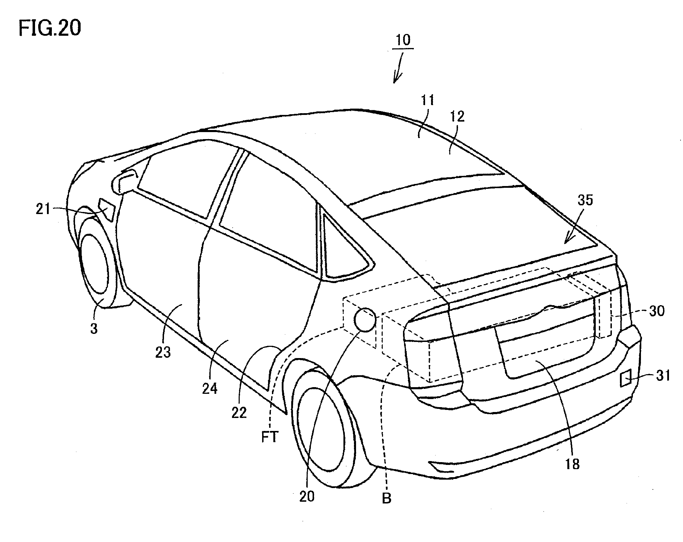

Vehicle 10 according to a second embodiment will be described with reference to Figs. 19-24. Fig. 19 is a side face of vehicle 10 according to the second embodiment. Fig. 20 is a perspective view of the rear face side of vehicle 10 shown in Fig. 19.

Referring to Figs. 19 and 20, charging unit 21 is arranged at a region of side face 15 at a front side relative to boarding opening 22, whereas fuel feed unit 20 is arranged at a rear side relative to boarding opening 22. Cord take out unit 31 is provided at rear face 18, as shown in Fig. 20. Cord housing device 30 is arranged in luggage compartment 35. Cord housing device 30 is downsized to prevent the volume of luggage compartment 35 to be reduced.

The base panel provided on the floor panel constitutes the bottom face of luggage compartment 35. Battery B is arranged on the floor panel and under the base panel. Therefore, by arranging cord housing device 30 at luggage compartment 35, cord housing device 30 can be located in proximity to battery B. As a result, the length of the wiring connecting cord housing device 30 and battery B can be shortened.

Fuel feed unit 20 and charging unit 21 are provided at side face 15 which is one of the circumferential face of vehicle 10. Cord take out unit 31 is provided at a region of the circumferential face of vehicle 10 other than side face 15.

A fuel feed nozzle and a charging plug provided at an external facility are connected to fuel feed unit 20 and charging unit 21. Therefore, an external facility will be used in either case of a fuel supplying operation using fuel feed unit 20 or a charging operation using charging unit 21.

Cord take out unit 31 has its charging plug 42 drawn out from vehicle 10 to be connected to an external power supply provided outside vehicle 10. Therefore, an external facility is dispensable when a charging operation is to be performed using cord take out unit 31. Only a household power supply, for example, is required.

Therefore, charge take out unit 31 is basically not used when a charging operation or fuel feeding operation is carried out at a station or the like.

Therefore, by providing cord take out unit 31 at a region of circumferential face 14 other than side face 15 where fuel feed unit 20 and charging unit 21 are provided in vehicle 10 of the present embodiment, the possibility of the worker confusing cord take out unit 31 with fuel feed unit 20 and charging unit 21 can be suppressed.

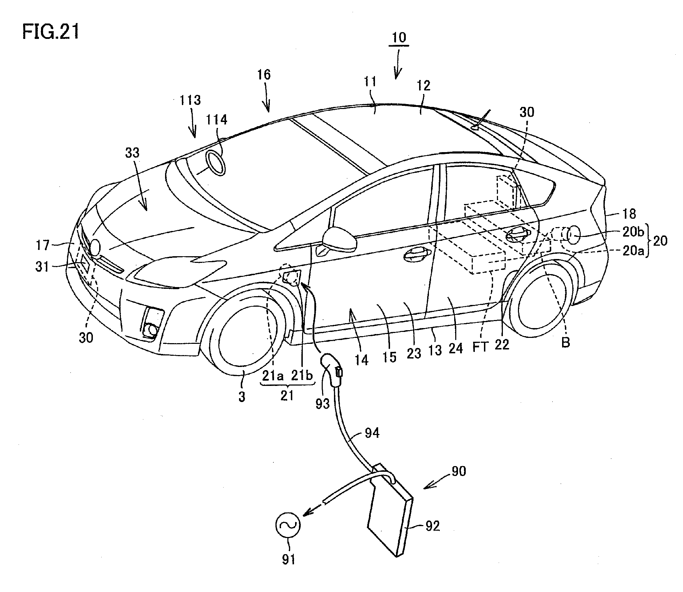

In the example shown in Figs. 19 and 20, cord take out unit 31 is positioned at, but not limited to, rear face 18. For example, Fig. 21 is a perspective view showing a first modification of the mounting position of cord take out unit 31. In the example of Fig. 21, cord take out unit 31 is provided at front face 17. The compact formation of cord housing device 30 allows mounting in the dead space within driving device storage chamber 33.

In a charging operation using charging plug 42 of cord take out unit 31, charging plug 42 is generally connected to a household power supply.

Since the time required for charging is considerable in such a case, the situation of charging plug 42 of cord take out unit 31 being connected to the household power supply will continue for a predetermined period of time.

Therefore, the user may forget about the continuation of the charging operation. Vehicle 10 of the present embodiment has cord take out unit 31 provided at front face 17, readily discernible from outside the vehicle. Moreover, charging cable 50 drawn out from cord take out unit 31 is readily discernible from driver seat 113. Therefore, the event of the user erroneously starting vehicle 10 during a charging operation can be suppressed.

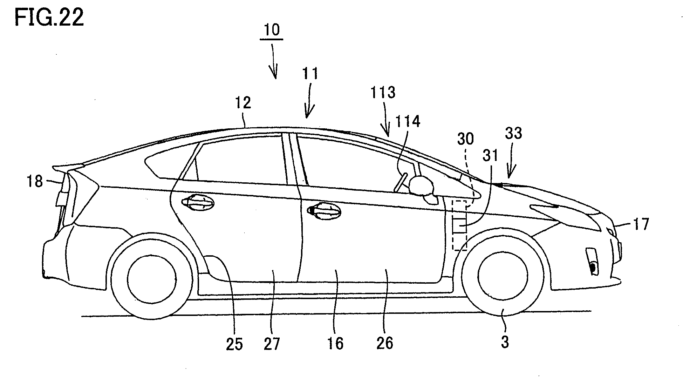

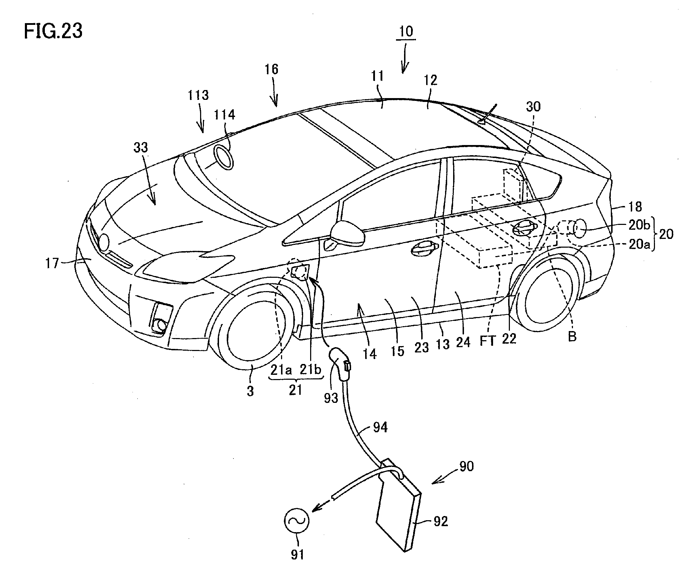

Fig. 22 is a side view representing a second modification of the mounting position of cord take out unit 31. Fig. 23 is a perspective view of vehicle 10 shown in Fig. 22. In the example of Fig. 22, driver seat 113 is located at the side of side face 16. Cord take out unit 31 is arranged at side face 16, and at a front side relative to boarding opening 25.

This position is in proximity to driver seat 113. When the driver is to get into the vehicle to sit on driver seat 113, the driver must open door 26. Cord take out unit 31 is arranged to be adjacent to boarding opening 25. Therefore, the driver can readily become aware of charging cable 50 and the like, when in a pulled out state from cord take out unit 31. Cord housing device 30 is arranged in driving device storage chamber 33. Cord housing device 30 can be, by virtue of the above-described downsizing, disposed at the dead space in driving device storage chamber 33. Fuel feed unit 20 and charging unit 21 are provided at side face 15, as shown in Fig. 23.

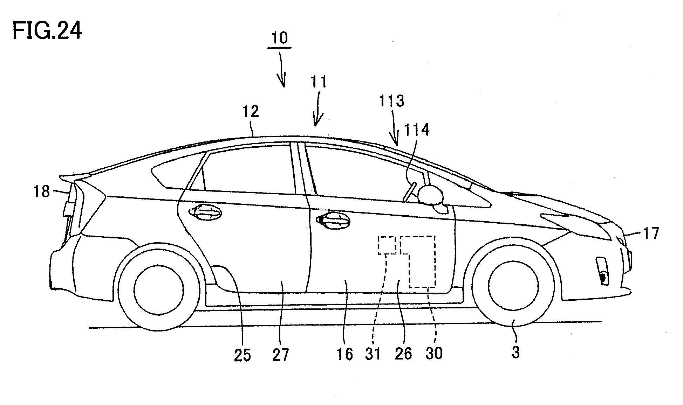

Fig. 24 is a side view representing a third modification of cord take out unit 31 and cord housing device 30. Similarly in the example of Fig. 24, fuel feed unit 20 and charging unit 21 are provided at side face 15, as shown in Fig. 23.

In the example of Fig. 24, cord housing device 30 is arranged inside door 26 that is to be opened when the driver is to sit on driver seat 113. Therefore, when charging cable 50 is drawn out from cord take out unit 31, the driver can confirm that charging cable 50 is reliably drawn out.

Cord housing device 30 according to the third embodiment is downsized, likewise with cord housing device 30 of the first embodiment. Therefore, cord housing device 30 can be placed at the dead space of door 26. Accordingly, the mounting efficiency of devices with respect to the entirety of the vehicle can be improved.

### (Third Embodiment)

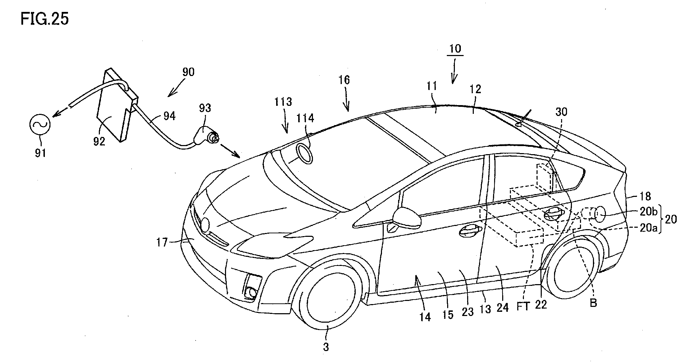

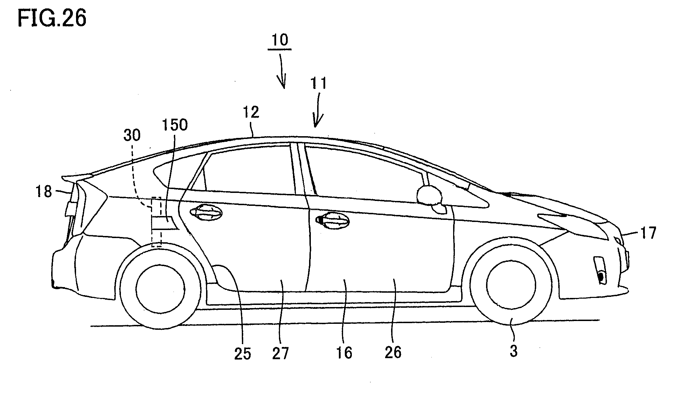

Vehicle 10 according to a third embodiment will be described with reference to Figs. 25-34. Figs. 25 and 26 are a perspective view and a side view, respectively, of vehicle 10 according to the third embodiment. Fuel feed unit 20 shown in Fig. 25 is provided at side face 15, and arranged at a rear side relative to boarding opening 25. As shown in Fig. 26, charging unit 150 is provided at side face 16, and arranged at a region of side face 16 at a rear side relative to boarding opening 25.

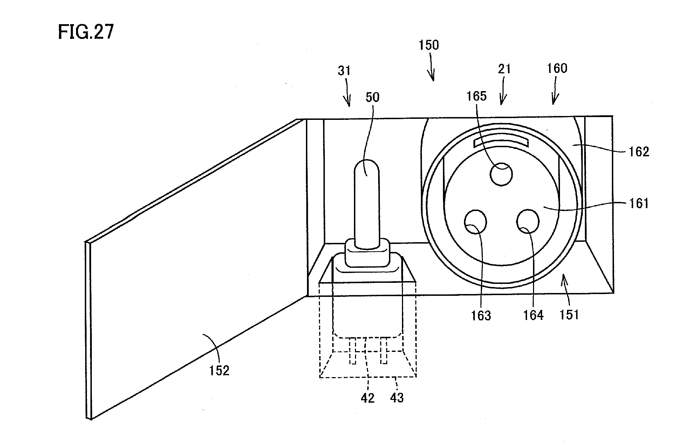

Fig. 27 is a perspective view of charging unit 150 viewed from above. As shown in Fig. 27, charging unit 150 includes a storage chamber 151 provided at side face 16, a lid 152 provided at side face 16 to open/close the opening of storage chamber 151, a charging plug 42 stored in storage chamber 151, and a charging connector 161 stored in storage chamber 151. Charging plug 93 of an external charging facility 90 shown in Fig. 25 is to be connected to charging connector 161.

In the present embodiment, charging unit 21 and cord take out unit 31 are stored within one storage chamber 151, and opened/closed by one lid 152.

Thus, charging unit 21 and cord take out unit 31 are both provided at side face 16.

Charging connector 161 is provided at side face 16 that is the side opposite to side face 15 where fuel feed unit 20 is provided. Cord take out unit 31 is provided at a region of circumferential face 14 other than side face 15 where fuel feed unit 20 is provided. Therefore, the arrangement of charging unit 21 and cord take out unit 31 around fuel feed unit 20 is avoided. The possibility of the worker carrying out the fuel feeding operation confusing fuel feed unit 20 with charging unit 21 and cord take out unit 31 can be suppressed.

Moreover, cord take out unit 31 provided at charging unit 150 is located at a rear side relative to boarding opening 25, as shown in Fig. 26. Therefore, the distance between cord take out unit 31 and the general household power supply, when connected, can be shortened, allowing the working efficiency to be improved.

Referring to Fig. 27, cord take out unit 31 and charging unit 21 are provided at the same side face 16. In the event of a charging operation, the devices will be located at the same unitary circumferential face.

Therefore, in the case of a charging operation using either cord take out unit 31 or using charging connector 161 of charging unit 21, vehicle 10 only has to be parked such that side face 16 is in proximity to the power supply or external charging facility 90. The possibility of the driver mistaking the parking position of vehicle 10 can be suppressed.

Furthermore, since cord take out unit 31 and charging unit 21 are stored in one storage chamber 151, as shown in Fig. 57, the worker carrying out the charging operation can readily identify the position of cord take out unit 31 and charging unit 21.

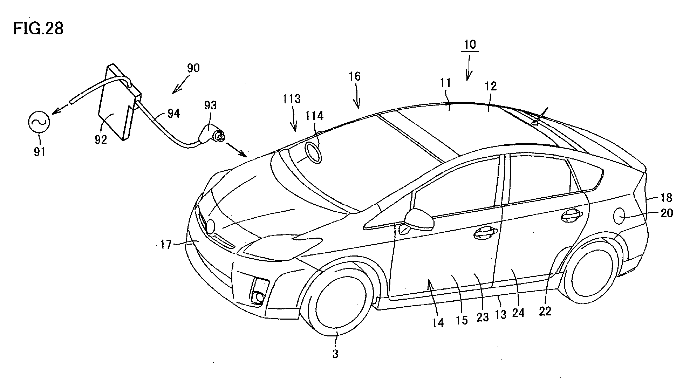

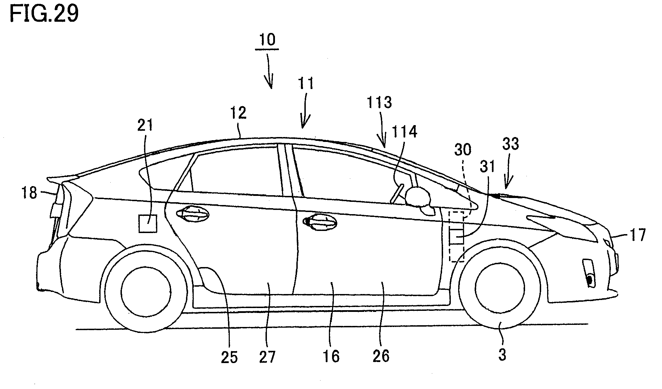

Figs. 28 and 29 represent a first modification of the mounting position of cord take out unit 31 and cord housing device 30 in vehicle 10 according to the third embodiment. Fig. 28 is a perspective view of vehicle 10 according to the first modification. Fig. 29 is a side view of vehicle 10 shown in Fig. 28.

Referring to Fig. 28, vehicle 10 of the first modification has fuel feed unit 20 provided at side face 15. Fuel feed unit 20 is provided at a region of side face 15 located at a rear side relative to boarding opening 22.

Referring to Fig. 29, charging unit 21 is arranged at a region of side face 16 at a rear side relative to boarding opening 25. Cord take out unit 31 is arranged at a region of side face 16 at a front side relative to boarding opening 25. Cord housing device 30 is stored in, for example, a driving device storage chamber 33.

In the example shown in Figs. 28 and 29, charging unit 21 and cord take out unit 31 are both provided at the same side face (unitary side face) 16. Therefore, an erroneous parking posture of vehicle 10 for charging will not readily occur in a charging operation, allowing the burden on the driver to be alleviated.

Charging unit 21 and fuel feed unit 20 are both devices for connecting a charging plug or fuel feed nozzle provided at an external facility, whereas cord take out unit 31 is a device for drawing out a device such as charging cable 50 and charging plug 42.

In other words, charging unit 21 and fuel feed unit 20 are devices for connection with an external device whereas cord take out unit 31 is a device for drawing out a device mounted on vehicle 10 to an external source.

For a charging operation or fuel feeding operation using charging unit 21 or fuel feed unit 20, an operation of attaching to vehicle 10 a device external to vehicle 10 is carried out. For a charging operation using cord take out unit 31, an operation of drawing out a device mounted on vehicle 10 to an external source is carried out.

Thus, the charging operation and fuel feeding operation using charging unit 21 and fuel feed unit 20 differs greatly from the charging operation using cord take out unit 31 in the procedure of the operation.

By virtue of arranging charging unit 21 and fuel feed unit 20 associated with the operation of attaching a device external to vehicle 10 at a rear side relative to boarding openings 22 and 25, and arranging cord take out unit 31 associated with the operation of drawing a device mounted on vehicle 10 outside at a front side relative to boarding opening 25, the worker or the like can remember the mounted location of cord take out unit 31 more easily.

Furthermore, since cord take out unit 31 is located in the proximity of driver seat 113, the driver can readily recognize charging cable 50, when drawn out from cord housing device 30.

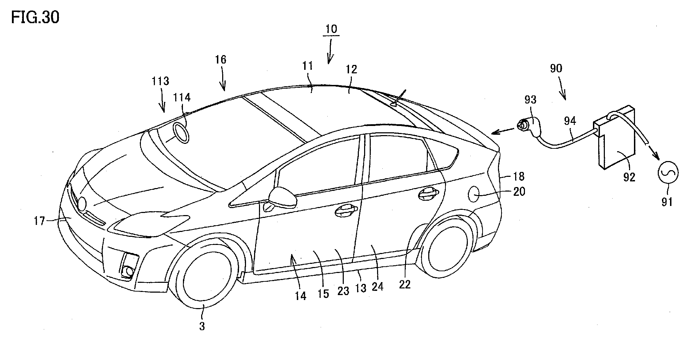

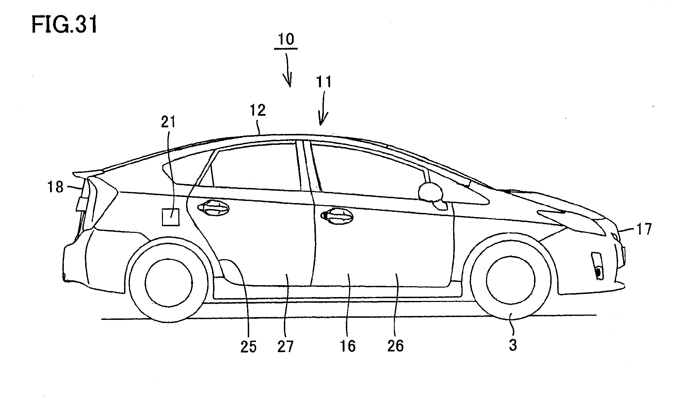

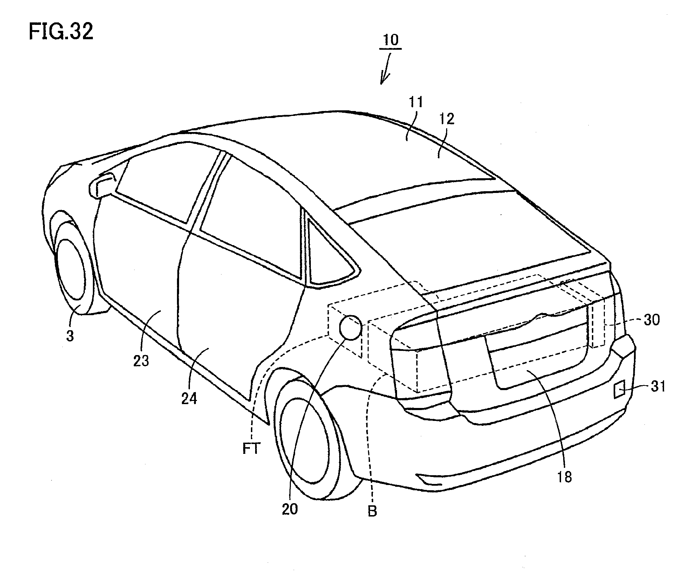

Figs. 30, 31 and 32 represent a second modification of vehicle 10 according to the third embodiment. Fig. 30 is a perspective view of vehicle 10 according to the second modification. Fig. 31 is a side view of vehicle 10 shown in Fig. 30. Fig. 32 is a perspective view of vehicle 10 shown in Fig. 30, viewed from the rear side.

Referring to Fig. 30, fuel feed unit 20 is provided at side face 15, and arranged at a rear side relative to boarding opening 22 at side face 15.

Referring to Fig. 31, charging unit 21 is arranged at a region of side face 16, located at a rear side relative to boarding opening 25. Referring to Fig. 32, cord take out unit 31 is provided at rear face 18.

As shown in Figs. 30-32, charging unit 21 and cord take out unit 31 are not located around fuel feed unit 20. The possibility of the worker confusing fuel feed unit 20 with charging unit 21 and cord take out unit 31 in a fuel feeding operation can be suppressed.

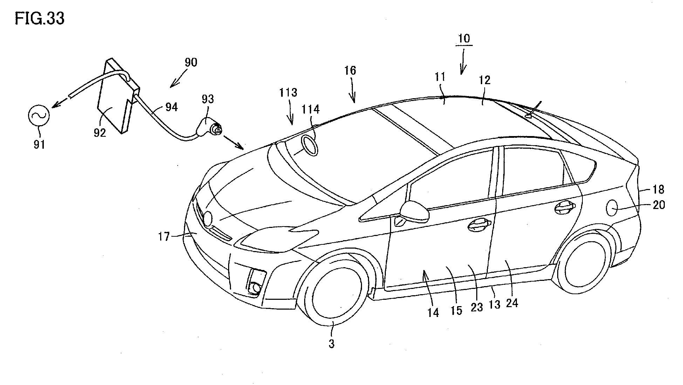

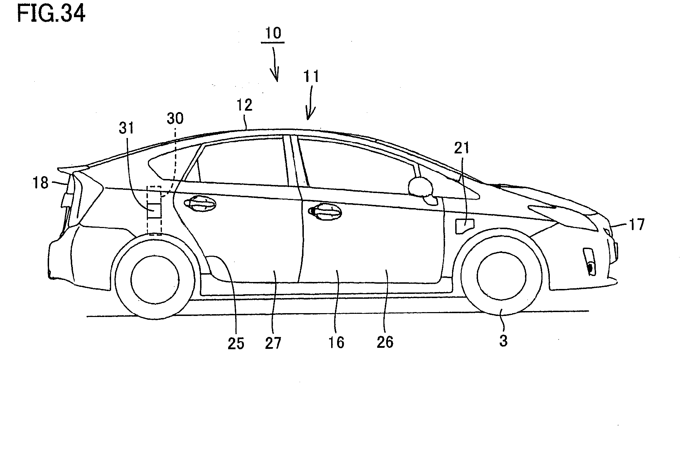

Figs. 33 and 34 represent a third modification of vehicle 10 according to the third embodiment. Fig. 33 is a perspective view of vehicle 10 according to the third modification. Fig. 34 is a side view of vehicle 10 shown in Fig. 33.

In the example of Fig. 33, fuel feed unit 20 is arranged at a region of side face 15 at a rear side relative to boarding opening 22.

Referring to Fig. 34, cord take out unit 31 is arranged at a region of side face 16, located at a rear side relative to boarding opening 25, whereas charging unit 21 is arranged at a region of side face 16, located at a front side relative to boarding opening 25. Therefore, charging unit 21 does not have to be arranged more backward than boarding opening 25.

Although the invention has been described based on the foregoing embodiments, it should be understood that the embodiments disclosed herein are illustrative and non-restrictive in every respect. The scope of the present invention is defined by the terms of the claims, and is intended to include any modifications within the scope and meaning equivalent to the terms of the claims.

### INDUSTRIAL APPLICABILITY

The present invention is applicable to a cord housing device and a vehicle.

### REFERENCE SIGNS LIST

1 engine; 2 power split mechanism; 3 front wheel; 4 converter; 5, 6 inverter; 8A, 8B switching element; 9 converter; 11 body; 12 top face; 13 bottom face; 14 circumferential face; 15, 16 side face; 17 front face; 18 rear face; 20 fuel feed unit; 20a nozzle insertion unit; 20b, 21b, 41, 152 lid; 21, 150 charging unit; 21a, 161 charging connector; 22, 25 boarding opening; 23, 24, 26, 27 door; 30 cord housing device; 31 cord take out unit; 33 driving device storage chamber; 34 passenger compartment; 35 luggage compartment; 40, 151 storage chamber; 42, 93 charging plug; 43 plug storage hole; 44 hole; 45, 112 packing; 46, 47 switch; 50 charging cable; 51, 70, 83, 101 enclosure; 52, 102 cord draw in device; 53, 103 top panel; 54, 104 bottom panel; 55, 56, 105, 106 side panel; 57, 107 rear panel; 58, 108 front panel; 60, 110 bent; 61, 62, 63 core wire; 64 insulative coating; 65, 66, 66 projection; 67 cable; 71, 72 roller; 73 rotating electric machine; 74 power transmission mechanism; 75 rotor; 76 stator; 77 stator coil; 78 stator core; 79 voltage sensor; 80, 81 gear; 82 heater chamber; 84, 85 support stem; 86, 87 fixture; 88 heater; 90 external charging facility; 91 external power supply; 94 cord; 95, 97 contact sensor; 98, 99 main surface; 111 lead out line; 113 driver seat; 114 steering wheel; B battery; C capacitor; CNTL1, CNTL2, CNTL3 control signal; FT fuel tank; L distance; L1, L2 distance; MG1, MG motor generator; W width.

## Claims

1. A cord housing device comprising:
an enclosure (51),
a cord (50) capable of being stored in said enclosure (51), and drawn out from said enclosure (51), and
a plug (42) provided at an end of the drawing out side of said cord (50), and connectable to an external power supply,
said cord (50) formed so as to bend back at bents (60) provided at intervals in a length direction of said cord (50), and extend in a meandering manner,
said cord (50) stored in said enclosure (51) such that a region of said cord (50) located between said bents (60) overlap each other.

2. The cord housing device according to claim 1, wherein
said cord (50) includes a core wire (61, 62, 63) and an insulative coating (64) covering said core wire (61, 62, 63),
in a straightened state of said cord, a projection (65, 66) is formed at a region of said insulative coating (64) corresponding to a bending outer circumferential side of said bent (60), and
said projection (65, 66) biases said cord (50) to bend back.

3. The cord housing device according to claim 1, wherein said enclosure (51) includes a first support supporting one side face of said cord (50) in a stored state, and a second support supporting the other side face of said cord (50) in the stored state.

4. The cord housing device according to claim 3, wherein said first support and said second support are sidewalls (55, 56) of said enclosure (51).

5. The cord housing device according to claim 3, wherein said a distance (L) between said first support and said second support is less than or equal to two times a width (W1) of said cord (50).

6. The cord housing device according to claim 1, wherein, at a cross section perpendicular to the length direction of said cord (50), said cord (50) has a circular shape.

7. The cord housing device according to claim 1, wherein, at a cross section perpendicular to the length direction of said cord (50), a thickness of said cord is smaller than a width of said cord (50).

8. The cord housing device according to claim 1, further comprising a draw in/out device for drawing said cord (50) in/out from said enclosure, wherein
said plug includes a first switch and a second switch,
said draw in/out device is driven such that, when said first switch is depressed, said cord (50) is drawn out from said enclosure (51), and when said second switch is depressed, said cord (50) is drawn into said enclosure (51).

9. The cord housing device according to claim 1, further comprising a draw in/out device for drawing said cord (50) in/out from said enclosure, wherein
said draw in/out device is driven such that, when a first external force in a direction to draw said cord (50) into said enclosure (51) is applied to said cord (50), said cord (50) is drawn into said enclosure (51), and when a second external force in a direction to draw out said cord (50) from said enclosure (51) is applied to said cord (50), said cord (50) is drawn outside of said enclosure (51).

10. The cord housing device according to claim 9, wherein
said draw in/out device includes a roller (71) for drawing in and out said cord (50), a motor driving said roller (71), and a detector,
said motor includes a rotor (75) connected to said roller (71), a stator (76) arranged around said rotor (75), and a coil (77) provided at said stator (76),
said detector detects a first back electromotive force and a second back electromotive force generated at said coil (77) by rotation of said rotor (75) through said first external force and said second external force, respectively,
said motor is driven such that said cord (50) is drawn into said enclosure (51) when said first back electromotive force is generated, and such that said cord (50) is drawn outside of said enclosure (51) when said second back electromotive force is generated.

11. The cord housing device according to claim 1, wherein a hole is formed at a bottom of said enclosure.

12. A vehicle comprising:
a body having a boarding opening formed,
a battery stored in said body,
a cord housing device defined in any of claims 1-11, capable of supplying electric power from said external power supply to said battery, and
a take out unit provided at said body, allowing said plug (42) and said cord (50) to be taken out,
said take out unit arranged at a rear side or a front side relative to said boarding opening.

13. A vehicle comprising:
a body (11) having a boarding opening formed,
a battery (B) stored in said body (11),
a cord housing device (30) defined in any of claims 1-11, capable of supplying electric power from said external power supply to said battery (B),
a take out unit (31) allowing said plug (42) and said cord (50) to be taken out,
a first connector (21) to which is connected a first external plug (93) connected to an external power supply, and
a second connector (20) to which is connected an externally provide second external plug, and to which energy differing from electric power is supplied from said second external plug,
said body (11) including a first side face and a second side face aligned in a width direction of the vehicle,
said first connector (21) and said second connector (20) provided at said first side face, and said take out unit (31) provided at a region of a circumferential face of said vehicle other than said first side face.

14. The vehicle according to claim 13, wherein said take out unit (31) is arranged at a rear side or a front side relative to the boarding opening.

15. The vehicle according to claim 13, wherein said take out unit (31) is provided at said second side face.

16. A vehicle comprising:
a body (11) having a boarding opening formed,
a battery (B) stored in said body (11),
a cord housing device (30) defined in any of claims 1-11, capable of supplying electric power from said external power supply to said battery (B),
a take out unit (31) allowing said plug (42) and said cord (50) to be taken out,
a first connector (21) to which is connected a first external plug (93) connected to an external power supply, and
a second connector (20) to which is connected an externally provide second external plug, and to which energy differing from electric power is supplied from said second external plug,
said body (11) including a first side face and a second side face aligned in a width direction of the vehicle,
said first connector (21) provided at said first side face,
said second connector (20) provided at said second side face,
said take out unit (31) provided at a region of a circumferential face of said vehicle other than said second side face.

17. The vehicle according to claim 16, wherein said first connector (21) and said take out unit (31) are provided at a rear side or a front side relative to said boarding opening.

18. The vehicle according to claim 16, wherein
an operation unit for operating the vehicle is provided in said body (11), and
said operation unit is provided closer to said first side face than said second side face.

19. A vehicle comprising:
a body (11) having a boarding opening formed,
a battery (B) stored in said body (11),
a cord housing device (30) defined in any of claims 1-11, capable of supplying electric power from said external power supply to said battery (B),
a take out unit (31) allowing said plug (42) and said cord (50) to be taken out, and
a first connector (21) to which is connected a first external plug (93) connected to an external power supply,
said body (11) including a top face, a bottom face, and a plurality of unitary circumferential faces provided between said top face and said bottom face,
said take out unit (3 1) and said first connector (21) provided at the same unitary circumferential face.

20. The vehicle according to claim 19, wherein
said body (11) includes a lid provided at a unitary circumferential face where said take out unit (31) and said first connector (21) are provided, and
said take out unit (31) and said first connector (21) can be opened/closed by said lid.
